(19) **Europäisches Patentamt / European Patent Office / Office européen des brevets**

(11) **EP 4 530 990 A1**

(12) **EUROPEAN PATENT APPLICATION**
published in accordance with Art. 153(4) EPC

(43) Date of publication:
02.04.2025 Bulletin 2025/14

(21) Application number: 23905576.7

(22) Date of filing: 20.11.2023

(51) International Patent Classification (IPC):
**G06T 13/40** (2011.01)      **G06V 40/16** (2022.01)
**G06V 10/82** (2022.01)

(52) Cooperative Patent Classification (CPC):
**G06T 13/40; G06V 10/82; G06V 40/16**

(86) International application number:
**PCT/CN2023/132621**

(87) International publication number:
**WO 2024/131407 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 19.12.2022 CN 202211632310

(71) Applicant: Beijing Zitiao Network Technology Co., Ltd.
Beijing 100190 (CN)

(72) Inventors:
- CHEN, Peibin
  Beijing 100028 (CN)
- ZHANG, Xijin
  Beijing 100028 (CN)
- LENG, Fuxing
  Beijing 100028 (CN)

(74) Representative: Williams, Michael David
Marks & Clerk LLP
1 New York Street
Manchester M1 4HD (GB)

(54) **FACIAL EXPRESSION SIMULATION METHOD AND APPARATUS, DEVICE, AND STORAGE MEDIUM**

(57) The present disclosure provides a facial expression simulation method and apparatus, a device, and a storage medium. The method comprises: collecting a local facial image to be processed of a target object, and generating an expression coefficient corresponding to the local facial image to be processed, wherein the local facial image to be processed belongs to an expression image sequence, and the expression coefficient is determined on the basis of the position of the local facial image to be processed in the expression image sequence; and simulating a facial expression of the target object according to the expression coefficient.

obtaining a sample sequence of a target expression action and dividing the sample sequence into a plurality of expression action intervals — S11

for any target sample image in the sample sequence, determining a target expression action interval in which the target sample image is located, and generating an expression coefficient corresponding to the target sample image according to an expression coefficient mapping strategy associated with the target expression action interval — S13

training the expression coefficient prediction model using the target sample image with the generated expression coefficient — S15

Fig. 1

## Description

### CROSS-REFERENCE TO RELATED APPLICATIONS

The present application is based on and claims priority of the Chinese Patent Application No. 202211632310.6 filed on December 19, 2022, the disclosure of which is incorporated by reference herein in its entirety.

### TECHNICAL FIELD

The present disclosure relates to the technical field of image processing, and in particular to a facial expression simulation method and apparatus, a device and a storage medium.

### BACKGROUND

At present, in terms of virtual reality (VR) expression driving, facial information of human faces can be collected through VR devices, and by processing the facial information, users' facial expressions can be simulated.

Generally speaking, in order to simulate complete facial expressions, it is often necessary to collect information from a large number of facial feature dimensions. However, in the scenario of VR devices, the VR devices can generally only collect partial facial information. For example, VR glasses can usually only collect users' eye area information, but cannot collect complete facial information. As a consequence, based on the facial information collected by the VR devices, the users' complete facial expressions cannot be accurately simulated.

### SUMMARY

In view of this, one or more embodiments of the present disclosure provide a facial expression simulation method and apparatus, a device and a storage medium, which can improve the simulation accuracy of facial expressions.

In an aspect, the present disclosure provides a facial expression simulation method, comprising: collecting a local facial image to be processed of a target object, and generating an expression coefficient corresponding to the local facial image to be processed; wherein the local facial image to be processed belongs to an expression image sequence, and the expression coefficient is determined on the basis of the position of the local facial image to be processed in the expression image sequence; and simulating a facial expression of the target object according to the expression coefficient.

In another aspect, the present disclosure further provides a facial expression simulation apparatus, comprising: an expression coefficient generation unit, configured to collect a local facial image to be processed of a target object, and generate an expression coefficient corresponding to the local facial image to be processed; wherein the local facial image to be processed belongs to an expression image sequence, and the expression coefficient is determined on the basis of the position of the local facial image to be processed in the expression image sequence; and an expression simulation unit, configured to simulate a facial expression of the target object according to the expression coefficient.

In another aspect, the present disclosure further provides an electronic device, comprising a memory and a processor, wherein the memory is configured to store a computer program which, when executed by the processor, implements the above-mentioned facial expression simulation method.

In another aspect, the present disclosure further provides a computer-readable storage medium configured to store a computer program, wherein the computer program, when executed by a processor, implements the above-mentioned facial expression simulation method.

### BRIEF DESCRIPTION OF THE DRAWINGS

The features and advantages of the embodiments of the present disclosure may be more clearly understood by referring to the accompanying drawings, which are schematic and should not be construed as limiting the present disclosure in any way. In the accompanying drawings:

FIG. 1 shows a schematic diagram of the steps of model training in one embodiment of the present disclosure;
FIG. 2 shows a schematic flowchart diagram of model training in one embodiment of the present disclosure;
FIG. 3 shows a schematic diagram of a facial expression simulation method in one embodiment of the present disclosure;
FIG. 4 shows a schematic diagram of functional modules of a facial expression simulation apparatus in one embodiment of the present disclosure; and
FIG. 5 shows a schematic structural diagram of an electronic device in one embodiment of the present disclosure.

**DETAILED DESCRIPTION**

In order to make the purpose, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments are only part of the embodiments of the present disclosure, not all of the embodiments. Based on the embodiments of the present disclosure, all other embodiments obtained by those skilled in the art without creative work shall fall within the scope of protection of the present disclosure.

When virtual reality devices are worn, the facial images collected through the virtual reality devices are usually not complete facial images, but local facial images. For example, when a user is wearing virtual reality glasses, the virtual reality glasses often collect eye images. Obviously, if an entire facial expression of the user is simulated based only on the collected local facial images, there will be inaccuracy in the simulated facial expression.

Currently, when performing simulation of a facial expression, a supervisory signal for a human facial image can be obtained using a 3D Morphable Models (3DMM) algorithm, and then the human facial image can be mapped to the supervisory signal by means of a convolutional neural network. However, if user's complete facial information cannot be collected, the supervisory signal will be inaccurate. In addition, due to the limitation of algorithm capabilities, in some scenarios, for some specific expression dimensions, it is difficult to obtain a supervisory signal of the corresponding expression coefficient from the human facial image, which in turn affects the subsequent expression driving effect. If the entire generation link of the supervisory signal is optimized, a great deal of investment will undoubtedly be consumed.

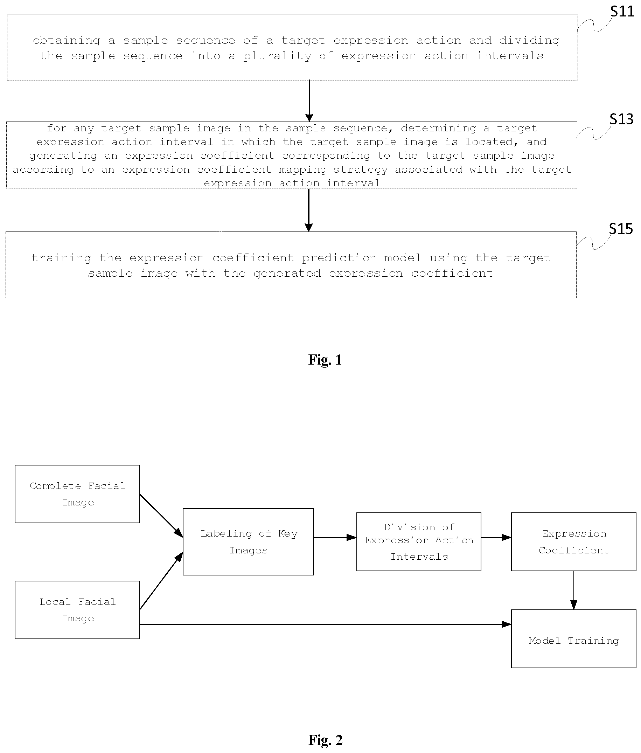

In view of this, one embodiment of the present disclosure provides a facial expression simulation method, which may set an accurate expression coefficient for a local facial image, and then perform model training using the local facial image carrying the expression coefficient, thus obtaining an expression coefficient prediction model. The expression coefficient prediction model may accurately predict the corresponding expression coefficient based on the input local facial image, so that subsequently, a correct facial expression can be simulated through the existing facial expression simulation algorithms. Referring to FIG. 1, when performing model training, the method may comprise the following steps.

S11: acquiring a sample sequence of a target expression action, and dividing the sample sequence into a plurality of expression action intervals.

In this embodiment, when samples for model training are prepared, the samples can be classified according to different expression actions. Generally speaking, one expression action corresponds to a plurality of different stages in time sequence. For example, for an expression action of frowning, there may be several different stages, such as starting to frown, continuous frowning, frowning stretching, and stopping frowning. In view of this, for the target expression action, the sample sequence of the target expression action may be obtained. The sample sequence may be either a video, or a plurality of video frames extracted from the video according to the playback time sequence of the video. In this way, the sample sequence may include a plurality of sample images, which may reflect the presentation process of the target expression action in time sequence.

In this embodiment, after obtaining the sample sequence of the target expression action, a plurality of corresponding key images may be labeled in the sample images according to a plurality of key nodes in the presentation process of the target expression action. The key nodes mentioned above may be summarized as: a start node of an expression action, a start node of maintaining the expression action, an end node of maintaining the expression action, and an end node of the expression action. The start node of maintaining the expression action may refer to a starting point of a period during which the expression action is maintained in a maximum state; and the end node of maintaining the expression action may refer to an ending point of the period during which the expression action is maintained in the maximum state. For example, taking frowning as an example, the plurality of key nodes may include a node of starting to frown, a start node of brow furrowing, an end node of brow furrowing, a node of stopping frowning, and the like, wherein the node of starting to frown refers to a node where a user goes from not frowning to frowning, the start node of brow furrowing refers to a start node where the user's eyebrows remain unchanged, the end node of brow furrowing refers to a node where the user's eyebrows begin to stretch, and the node of stopping frowning refers to a node where the user goes from frowning to not frowning.

After determining the plurality of key nodes, the sample images corresponding respectively to the key nodes may be used as labeled key images. Meanwhile, the time sequence number of these key images in the sample sequence may be recorded. According to different actual scenarios, the time sequence number may be expressed in different ways. For example, the time sequence number may be either a frame number of a key image in the sample sequence, or a time node corresponding to the key image in the sample sequence. The present disclosure does not limit the specific presentation form of the time sequence number.

Of course, in practical application, the above key images may also be automatically recognized from the sample images using a key point recognition algorithm. Specifically, position information of a preset facial feature may be recognized from each sample image in the sample sequence, wherein the preset facial feature may be a facial feature included in the sample image, and the preset facial feature is a feature that can reflect an expression action. For example, the preset facial feature may be eyes or eyebrows, so that an expression action such as blinking, frowning, eyebrow raise or the like may be captured by recognizing the preset facial feature. In recognizing the preset facial feature, it is possible to recognize a specified number of key points in the preset facial feature using the key point recognition technology, thereby determining position information of the key points in each sample image. For example, in performing recognition of eyes, it is possible to recognize 12 key points of the upper eyelid and 12 key points of the lower eyelid, and by recognizing these 24 key points, coordinates of the 24 key points in the sample image can be obtained, and a combination of these coordinates may constitute the position information of the preset facial feature.

In this embodiment, after recognizing the position information of the preset facial feature, a change trajectory of the preset facial feature in the sample sequence may be determined by summarizing the position information. In this way, by analyzing the position information, a plurality of expression change critical nodes may be determined in an expression image sequence, wherein the expression change critical nodes may be used for division of the stages where an expression action is located. For example, the expression change critical nodes may be a start node of the expression action, a start node of maintaining the expression action, an end node of maintaining the expression action, and an end node of the expression action, which are described earlier. After determining the expression change critical nodes, the sample images corresponding to the expression change critical nodes may be used as the key images in the sample sequence. At the same time, the time sequence number of the respective key images may also be determined, which may be either a frame number or a time node.

In this embodiment, after labeling or recognizing the plurality of key images in the sample sequence, the sample sequence may be divided into a plurality of expression action intervals using the key images. Taking frowning as an example, an expression action interval composed of the node of starting to frown and the start node of brow furrowing may represent a dynamic change process of the eyebrow position in the early stage of frowning; an expression action interval composed of the start node of brow furrowing and the end node of brow furrowing may represent a process of the eyebrows being fixed; an expression action interval composed of the end node of brow furrowing and the node of stopping frowning may represent a dynamic change process of the eyebrows in the frowning action stretching process.

In this embodiment, the sample images in the sample sequence may be collected using virtual reality devices, and thus the sample images may be local facial images obtained by shooting. In practical application, it is sometimes impossible to accurately distinguish the stages where an expression action is located only according to the local facial images, thus failing to accurately label the key images in the sample sequence. For example, for an expression action of a tongue sticking out, if only eye images are collected through virtual reality glasses, key images corresponding to the action of a tongue sticking out cannot be labeled in the eye images.

In view of this, in one embodiment, in obtaining the sample sequence of the target expression action, in addition to the local facial image collected through the virtual reality device, an overall facial image of the user wearing the virtual reality device may be captured through an external image collection device. In this way, at the same time, a set of sample images formed by the local facial image and the overall facial image may be available. In labeling the key images in the sample sequence and determining the time sequence number of the key images, different facial images may be used for different expression actions. For example, in terms of frowning, the labeling and the time sequence number determination of the key images can be completed through the local facial image. But in terms of a tongue sticking out, it is necessary to combine the overall facial image therewith to complete the labeling and the time sequence number determination of the key images.

S13: for any target sample image in the sample sequence, determining a target expression action interval in which the target sample image is located, and generating an expression coefficient corresponding to the target sample image according to an expression coefficient mapping strategy associated with the target expression action interval.

In this embodiment, different expression action intervals should correspond to different expression coefficients. In view of this, different expression coefficient mapping strategies can be set for different expression action intervals.

In a specific application example, the time sequence number of respective nodes may be marked as follows: the start node of the target expression action is marked as S, the start node of maintaining the target expression action is marked as $M_1$, the end node of maintaining the target expression action is marked as $M_2$, and the end node of the target expression action is marked as E, and then the expression coefficient mapping strategy may be shown below:

$$BS(t) = \begin{cases} \frac{t-S}{M_1-S}, & S \leq t \leq M_1 \\ 1, & M_1 \leq t \leq M_2 \\ 1 - \frac{t-M_2}{E-M_2}, & M_2 \leq t \leq E \end{cases}$$

where $t$ represents the time sequence number of any sample image in the sample sequence, and *BS(t)* represents an expression coefficient corresponding to the sample image with the time sequence number t. It can be seen that different expression coefficient mapping strategies may be adopted for different expression action intervals, so that the expression coefficients corresponding to the sample images may be calculated.

It should be noted that the above formula is only a feasible way to calculate an expression coefficient in practical application. Generally speaking, as long as the way to calculate an expression coefficient can perform division according to an expression action interval, it should fall within the protection scope of the present disclosure. It can be seen from the above description that when determining an expression coefficient of any sample image in the sample sequence, it is only necessary to label the time sequence number of a key image in the sample sequence in advance. After labeling the time sequence number of the key image, an expression coefficient of a sample image can be automatically generated according to the expression action interval where the time sequence number of the sample image is located. In this way, high-quality supervisory signals for multiple consecutive frames may be generated with only a small amount of labeling cost. In addition, the present disclosure does not limit the way of labeling the time sequence number of the key image, and the key image may be recognized from the sample sequence using the relevant image recognition technology or by manual recognition, so that the time sequence number of the key image may be labeled.

As can be seen from the above, for any target sample image in the sample sequence, the target expression action interval in which the target sample image is located may be determined according to the time sequence number of the target sample image. Then, the expression coefficient corresponding to the target sample image may be generated according to the expression coefficient mapping strategy associated with the target expression action interval.

S15: training an expression coefficient prediction model using the target sample image with the generated expression coefficient.

Referring to FIG 2, after obtaining the corresponding sample sequences for different expression actions, labeling the key images in the sample sequences and calculating the expression coefficients corresponding to the respective sample images, it is possible to use the generated expression coefficients as label values of the sample images, and in this way, the sample images carrying the label values can be used to train the expression coefficient prediction model. Generally speaking, a sample image for training may be a local facial image captured by the virtual reality device, and in the aforementioned embodiment, although the user's overall facial image is also captured, the overall facial image is mainly used for labeling the key image and determine the time sequence number of the key image so that an accurate expression coefficient can be calculated. When model training is finally performed, the input sample image is usually a local facial image, and in this way, after training the expression coefficient prediction model, the local facial image to be predicted may be input into the model, so that the corresponding expression coefficient is output.

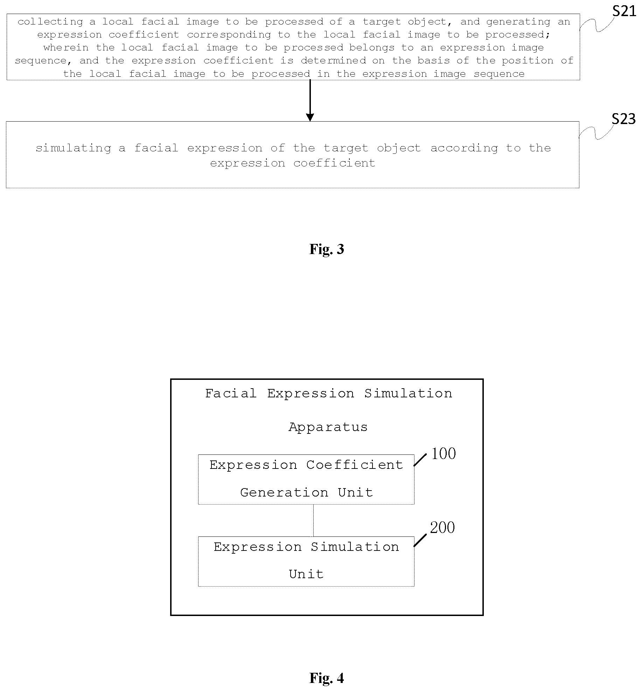

One embodiment of the present disclosure further provides a facial expression simulation method. Referring to FIG. 3, the method may comprise the following steps.

S21: collecting a local facial image to be processed of a target object, and generating an expression coefficient corresponding to the local facial image to be processed; wherein the local facial image to be processed belongs to an expression image sequence, and the expression coefficient is determined on the basis of the position of the local facial image to be processed in the expression image sequence.

In this embodiment, the target object may be a user whose facial expression needs to be simulated, and the local facial image to be processed of the target object may be collected through the virtual reality device worn by the target object. The local facial image to be processed may be input into the expression coefficient prediction model trained in the aforementioned embodiment, so that the expression coefficient corresponding to the local facial image to be processed is output through the expression coefficient prediction model. It can be seen from the foregoing description that the expression coefficient of the local facial image to be processed is related to the position of the local facial image to be processed in the expression image sequence. The advantage of this processing is that for each frame of local facial image collected by the virtual reality device, the corresponding expression coefficient can be generated in a timely manner through the expression coefficient prediction model, which can ensure that the subsequent facial expression simulation can have high timeliness.

However, in some scenarios where the timeliness requirement for facial expression simulation is not particularly high, it is possible to analyze the local facial image in the captured video and generate the corresponding expression coefficient. Specifically, a video of the target object within a period of time may be collected through the virtual reality device, the video may include multiple frames of local facial images, and the duration of the video usually covers an entire process of an expression action. In this way, the video collected by the virtual reality device may be regarded as an expression image sequence composed of the multiple frames of local facial images. For any frame of local facial image therein, an expression coefficient corresponding to the local facial image may be generated according to the position of the local facial image in the expression image sequence.

In this embodiment, by analyzing the respective local facial images in the expression image sequence, a plurality of key images may be determined in the expression image sequence. Specifically, position information of a preset facial feature may be recognized in the respective local facial images of the expression image sequence, wherein the preset facial feature may be a facial feature included in the local facial images, and the preset facial feature is a feature that can reflect an expression action. For example, the preset facial feature may be eyes or eyebrows, so that an expression action such as blinking, frowning, eyebrow raise or the like may be captured by recognizing the preset facial feature. In recognizing the preset facial feature, it is possible to recognize a specified number of key points in the preset facial feature using the key point recognition technology, thereby determining position information of the key points in each local facial image. For example, in performing recognition of eyes, it is possible to recognize 12 key points of the upper eyelid and 12 key points of the lower eyelid, and by recognizing these 24 key points, coordinates of the 24 key points in the local facial image may be obtained, and combination of these coordinates may constitute the position information of the preset facial feature.

In this embodiment, after recognizing the position information of the preset facial feature, a change trajectory of the preset facial feature in the expression image sequence may be determined by summarizing the position information. In this way, by analyzing the position information, a plurality of expression change critical nodes may be determined in an expression image sequence, wherein the expression change critical nodes may be used for division of the stages where an expression action is located. For example, the expression change critical nodes may be a start node of the expression action, a start node of maintaining the expression action, an end node of maintaining the expression action, and an end node of the expression action, which are described in step S11. After determining the expression change critical nodes, the local facial images corresponding to the expression change critical nodes may be used as the key images in the expression image sequence. At the same time, the time sequence number of the respective key images may also be determined, which may be either a frame number or a time node.

In this embodiment, the time sequence relationship of the key images in the expression image sequence may characterize an action process of the target expression action, and the key images may be used to divide the expression image sequence into a plurality of expression action intervals. In practical application, the expression action intervals may be associated with respective expression coefficient mapping strategies, and in this way, for any local facial image in an expression image sequence, the expression action interval in which the local facial image is located may be determined, and through the expression coefficient mapping strategy associated with the expression action interval, the expression coefficient corresponding to the local facial image may be generated.

In a specific application example, for the calculation formula of the expression coefficient, reference can be made to the description in step S11, which will not be repeated here.

S23: simulating the facial expression of the target object according to the expression coefficient.

In this embodiment, after the expression coefficient corresponding to the local facial image to be processed is generated, the facial expression of the target object may be simulated based on the expression coefficient. In practical application, simulation of a facial expression usually requires expression coefficients of respective feature dimensions of a face. For example, in some scenarios, the corresponding facial expression can be simulated according to expression coefficients of 52 feature dimensions of a face.

In this embodiment, although the virtual reality device collects a local facial image, since an expression coefficient is calculated for the local facial image based on an overall facial image during model training, with the technical solution provided by the present disclosure, when only the local facial image is obtained, expression coefficients of other feature dimensions other than the local facial image may also be generated. For example, for an expression action of a tongue sticking out, the virtual reality device may only collect an eye image, but during model training, an overall facial image will be combined therewith to determine a key image and the corresponding expression coefficient will be calculated for the eye image based on the time sequence number of the key image, so that the calculated expression coefficient can reflect the expression action of a tongue sticking out. In the subsequent model training process, the expression coefficient characterizing the expression action of a tongue sticking out may be used as a label value of the eye image, so that when the trained model subsequently recognizes the input eye image, if the input eye image corresponds to the expression action of a tongue sticking out, the model can accurately output the expression coefficient characterizing the tongue sticking out.

When simulating the overall facial expression of the target object, a default facial expression may be loaded first, and each facial feature dimension in the default facial expression may have an original expression coefficient. The default facial expression may be regarded as an expression template, which characterizes that the face of the target object currently does not have any expression action. Subsequently, the original expression coefficients of some of the facial feature dimensions may be corrected using the expression coefficient generated in step S21, so that the current expression action of the target object can be accurately simulated based on the corrected expression coefficients.

Specifically, an expression type characterized by the expression image sequence may be recognized, wherein different expression types may correspond to different facial feature dimensions that need to be corrected. For example, for an expression action of a tongue sticking out, the facial feature dimension that needs to be corrected may be a mouth feature dimension; for an expression action of frowning, the facial feature dimension that needs to be corrected may be an eyebrow feature dimension.

As is clear, after recognizing the expression type characterized by the expression image sequence, a target feature dimension corresponding to the expression type may be determined from a plurality of facial feature dimensions of the target object. The target feature dimension may be, for example, the above-mentioned mouth feature dimension, eyebrow feature dimension, or the like. Then, an original expression coefficient of the target feature dimension may be corrected to an expression coefficient corresponding to the local facial image, thereby obtaining the corrected expression coefficients of the respective facial feature dimensions. Based on the corrected expression coefficients of the respective facial feature dimensions, the facial expression of the target object can be simulated.

It can be seen from the above description that in the technical solution provided by one or more embodiments of the present disclosure, an accurate expression coefficient may be generated for a local facial image. Then the original expression coefficients for some facial feature dimensions may be corrected using the generated expression coefficient. The corrected expression coefficients are compatible with the existing 3DMM algorithm and can simulate a facial expression with high accuracy without significantly changing the algorithm link.

In the technical solution provided by one or more embodiments of the present disclosure, when generating the expression coefficient corresponding to the local facial image to be processed, the expression image sequence to which the local facial image to be processed belongs may be used in conjunction. In the expression image sequence, a complete process of an expression action may be included. According to the position of the local facial image to be processed in the expression image sequence, it is possible to know at which stage in the entire expression action the local facial image to be processed is. Generally speaking, the same expression action often has the same or similar presentation process, and after determining the stage, in the entire expression action, where the local facial image to be processed is located, an accurate expression coefficient may be obtained. Subsequently, when performing facial expression simulation based on the generated expression coefficient, the facial expression that is consistent with an actual expression action can be simulated, thereby improving the facial expression simulation accuracy.

In addition, due to the limitation of algorithm capabilities, in some scenarios, for some specific expression dimensions, it is difficult to obtain a supervisory signal of the corresponding expression coefficient from a human facial image. However, with the help of the technical solution provided by the present disclosure, with respect to such expression dimensions for which it is difficult to obtain a supervisory signal, the supervisory signal of the expression coefficient can be obtained in a targeted manner in the way described above, without optimizing the entire link, thereby improving the efficiency of model training.

Referring to FIG. 4, one embodiment of the present disclosure further provides a facial expression simulation apparatus, comprising:

> an expression coefficient generation unit 100, configured to collect a local facial image to be processed of a target object, and generate an expression coefficient corresponding to the local facial image to be processed; wherein the local facial image to be processed belongs to an expression image sequence, and the expression coefficient is determined on the basis of the position of the local facial image to be processed in the expression image sequence; and

> an expression simulation unit 200, configured to simulate a facial expression of the target object according to the expression coefficient.

Herein, the specific processing logic of the respective functional modules can be found in the description of the aforementioned method embodiments, which will not be repeated here.

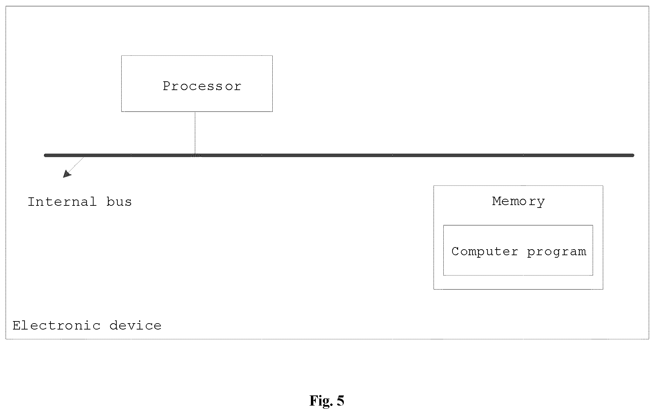

Referring to FIG. 5, the present disclosure further provides an electronic device, which comprises a memory and a processor, wherein the memory is configured to store a computer program which, when executed by the processor, implements the above-mentioned facial expression simulation method.

The respective units set forth in the above embodiments may be implemented by a computer chip or a product with a certain function. A typical implementation device is a computer. Specifically, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

For the convenience of description, the above devices are described in various units according to their functions. Of course, when implementing the present application, the functions of the respective units can be implemented in the same or multiple software and/or hardware.

The present disclosure further provides a computer-readable storage medium configured to store a computer program which, when executed by a processor, implements the above-mentioned facial expression simulation method.

Herein, the processor may be a central processing unit (CPU). The processor may also be other generalpurpose processors, Digital Signal Processor (DSP), Application Specific Integrated Circuit (ASIC), Field-Programmable Gate Array (FPGA), or other programmable logic devices, discrete gate or transistor logic devices, discrete hardware components and other chips, or a combination of the above-mentioned types of chips.

As a non-transitory computer-readable storage medium, the memory may be configured to store non-transitory software programs, non-transitory computer executable programs and modules, such as program instructions/modules corresponding to the method in the embodiments of the present disclosure. The processor executes various functional applications and data processing by running the non-transitory software programs, instructions and modules stored in the memory, that is, implements the method in the above method embodiments.

The memory may include a program storage area and a data storage area, wherein the program storage area may store an operating system and an application program required for at least one function; the data storage area may store data created by the processor, etc. In addition, the memory may include high-speed random access memory and may also include non-volatile memory, such as at least one disk storage device, flash memory device, or other non-volatile solid-state storage device. In some embodiments, the memory may optionally include a memory remotely disposed relative to the processor, and these remote memories may be connected to the processor via a network. Examples of the above-mentioned network include, but are not limited to, the Internet, an intranet, a local area network, a mobile communication network and combinations thereof.

Those skilled in the art will understand that all or part of the processes in the above-mentioned embodiment methods can be implemented by instructing related hardware through a computer program, the program may be stored in a computer-readable storage medium, and the program, when executed, may include the processes of the embodiments of the above-mentioned methods. The storage medium may be a magnetic disk, an optical disk, a read-only memory (ROM), a random access memory (RAM), a flash memory, a hard disk drive (HDD) or a solid-state drive (SSD), etc.; the storage medium may also include a combination of the above-mentioned types of memory.

The respective embodiments in this specification are described in a progressive manner, and the same or similar parts between the respective embodiments can be referenced to each other, and each embodiment focuses on the differences from other embodiments. In particular, for the embodiments of the apparatus, device and storage medium, since they are basically similar to the method embodiments, the description is relatively simple, and for relevant parts, reference can be made to part of the description of the method embodiments.

The above description is merely embodiments of the present application and is not intended to limit the present application. For those skilled in the art, various modifications and variations may be made to the present application. Any modifications, equivalent substitutions, improvements, etc. made within the spirit and principles of the present application should be included in the scope of the claims of the present application.

Although the embodiments of the present disclosure have been described in conjunction with the accompanying drawings, those skilled in the art may make various modifications and variations without departing from the spirit and scope of the present disclosure, and such modifications and variations are all within the scope defined by the appended claims.

## Claims

1. A facial expression simulation method, comprising:

   collecting a local facial image to be processed of a target object, and generating an expression coefficient corresponding to the local facial image to be processed; wherein the local facial image to be processed belongs to an expression image sequence, and the expression coefficient is determined on the basis of the position of the local facial image to be processed in the expression image sequence; and
   simulating a facial expression of the target object according to the expression coefficient.

2. The method according to claim 1, wherein the expression image sequence comprises a plurality of key images of a target expression action, the time sequence relationship of the plurality of key images in the expression image sequence characterizes an action process of the target expression action, and the plurality of key images divide the expression image sequence into at least two expression action intervals; and
   wherein the expression coefficient is determined based on the expression action interval in which the local facial image to be processed is located.

3. The method according to claim 2, wherein the key images in the expression image sequence are determined by:

   recognizing position information of a preset facial feature in respective local facial images of the expression image sequence;
   determining a plurality of expression change critical nodes according to the position information, and using the local facial images corresponding to the expression change critical nodes as the key images in the expression image sequence.

4. The method according to claim 2 or 3, wherein the expression action intervals are respectively associated with a corresponding expression coefficient mapping strategy; after determining the expression action interval in which the local facial image to be processed is located, the expression coefficient corresponding to the local facial image to be processed is generated through an expression coefficient mapping strategy associated with the expression action interval.

5. The method according to any one of claims 1 to 4, wherein simulating a facial expression of the target object according to the expression coefficient comprises:

recognizing an expression type **characterized by** the expression image sequence, and determining a target feature dimension corresponding to the expression type among a plurality of facial feature dimensions of the target object; wherein respective facial feature dimensions of the target object have their respective original expression coefficients; and
correcting an original expression coefficient of the target feature dimension to the expression coefficient corresponding to the local facial image to be processed, and simulating the facial expression of the target object according to the corrected expression coefficients of the respective facial feature dimensions.

6. The method according to any one of claims 1 to 5, wherein generating an expression coefficient corresponding to the local facial image to be processed comprises:

inputting the local facial image to be processed into an expression coefficient prediction model having been trained, to output the expression coefficient corresponding to the local facial image to be processed through the expression coefficient prediction model;
wherein the expression coefficient prediction model is trained by:

obtaining a sample sequence of a target expression action and dividing the sample sequence into a plurality of expression action intervals;
for any target sample image in the sample sequence, determining a target expression action interval in which the target sample image is located, and generating an expression coefficient corresponding to the target sample image according to an expression coefficient mapping strategy associated with the target expression action interval; and
training the expression coefficient prediction model using the target sample image with the generated expression coefficient.

7. The method according to claim 6, wherein dividing the sample sequence into a plurality of expression action intervals comprises:

recognizing a plurality of key images from the sample images comprised in the sample sequence, wherein the time sequence relationship of the plurality of key images in the sample sequence characterizes an action process of the target expression action;
dividing the sample sequence into a plurality of expression action intervals using the plurality of key images.

8. The method according to claim 7, wherein recognizing a plurality of key images comprises:

recognizing position information of a preset facial feature in respective sample images of the sample sequence; and
determining a plurality of expression change critical nodes according to the position information, and using sample images corresponding to the expression change critical nodes as the key images in the sample sequence.

9. A facial expression simulation apparatus, comprising:

an expression coefficient generation unit, configured to collect a local facial image to be processed of a target object, and generate an expression coefficient corresponding to the local facial image to be processed; wherein the local facial image to be processed belongs to an expression image sequence, and the expression coefficient is determined on the basis of the position of the local facial image to be processed in the expression image sequence; and
an expression simulation unit, configured to simulate a facial expression of the target object according to the expression coefficient.

10. An electronic device, comprising a memory and a processor, wherein the memory is configured to store a computer program which, when executed by the processor, implements the method according to any one of claims 1-8.

11. A computer-readable storage medium, configured to store a computer program which, when executed by a processor, implements the method according to any one of claims 1-8.

S11

obtaining a sample sequence of a target expression action and dividing the sample sequence into a plurality of expression action intervals

S13

for any target sample image in the sample sequence, determining a target expression action interval in which the target sample image is located, and generating an expression coefficient corresponding to the target sample image according to an expression coefficient mapping strategy associated with the target expression action interval

S15

training the expression coefficient prediction model using the target sample image with the generated expression coefficient

**Fig. 1**

Complete Facial Image

Local Facial Image

Labeling of Key Images

Division of Expression Action Intervals

Expression Coefficient

Model Training

**Fig. 2**

collecting a local facial image to be processed of a target object, and generating an expression coefficient corresponding to the local facial image to be processed; wherein the local facial image to be processed belongs to an expression image sequence, and the expression coefficient is determined on the basis of the position of the local facial image to be processed in the expression image sequence

S21

simulating a facial expression of the target object according to the expression coefficient

S23

**Fig. 3**

Facial Expression Simulation Apparatus

Expression Coefficient Generation Unit

100

Expression Simulation Unit

200

**Fig. 4**

Processor

Internal bus

Electronic device

Memory

Computer program

**Fig. 5**

## INTERNATIONAL SEARCH REPORT

| International application No. |
| --- |
| **PCT/CN2023/132621** |

**A.    CLASSIFICATION OF SUBJECT MATTER**

G06T13/40(2011.01)i;  G06V40/16(2022.01)i;  G06V10/82(2022.01)i

According to International Patent Classification (IPC) or to both national classification and IPC

**B.    FIELDS SEARCHED**

Minimum documentation searched (classification system followed by classification symbols)

IPC: G06T, G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 表情, 参数, 系数, 开始, 结束, 保持, 序列, 生成, 模拟, expression, parameter, coefficient, period, start, end, continu+, serial, generat+, simulat+, blendshape

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 115937372 A (BEIJING ZITIAO NETWORK TECHNOLOGY CO., LTD.) 07 April 2023 (2023-04-07)<br>    claims 1-11 | 1-11 |
| Y | US 2021390767 A1 (MICROSOFT TECHNOLOGY LICENSING, LLC) 16 December 2021 (2021-12-16)<br>    description, paragraphs [0018]-[0057] | 1-11 |
| Y | CN 106104633 A (INTEL CORP.) 09 November 2016 (2016-11-09)<br>    description, paragraphs [0022]-[0049] | 1-11 |
| A | CN 110390704 A (SHENZHEN ZHUIYI TECHNOLOGY CO., LTD.) 29 October 2019 (2019-10-29)<br>    entire document | 1-11 |
| A | CN 113781613 A (GUANGZHOU HUYA TECHNOLOGY CO., LTD.) 10 December 2021 (2021-12-10)<br>    entire document | 1-11 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 January 2024** | **24 January 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/132621**

| Patent document cited in search report | | | Publication date (day/month/year) | Patent family member(s) | | | Publication date (day/month/year) |
|---|---|---|---|---|---|---|---|
| CN | 115937372 | A | 07 April 2023 | None | | | |
| US | 2021390767 | A1 | 16 December 2021 | EP | 4165602 | A1 | 19 April 2023 |
| | | | | WO | 2021252092 | A1 | 16 December 2021 |
| CN | 106104633 | A | 09 November 2016 | WO | 2015139231 | A1 | 24 September 2015 |
| | | | | US | 2016042548 | A1 | 11 February 2016 |
| CN | 110390704 | A | 29 October 2019 | None | | | |
| CN | 113781613 | A | 10 December 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211632310